# EUROPÄISCHE PATENTSCHRIFT

(11) **EP 0 556 756 B1**
(45) Veröffentlichungstag und Bekanntmachung des Hinweises auf die Patenterteilung: **16.08.1995**
(21) Anmeldenummer: 93102292.5
(22) Anmeldetag: 13.02.1993
(51) Int. Cl.: H02K 3/38

(54) **Isolierkappe für Stabverbindungen und Ableitungen an Wicklungen elektrischer Maschinen**
Insulating cap for bar connections or branching in electrical machine windings
Capuchon isolant pour les branchements ou connexions des barres d'enroulement de machines électriques

(30) Priorität: 20.02.1992 DE 4205168
(43) Veröffentlichungstag der Anmeldung: 25.08.1993
(73) Patentinhaber: VEM-Elektroantriebe GmbH, D-01259 Dresden (DE)
(72) Erfinder: Golbig, Wolfgang, Prof. Dr., O-8021 Dresden (DE); Zima, Hans, O-8021 Dresden (DE)

(56) Entgegenhaltungen:
- WO-A-85/04532
- DD-A- 62 368
- DE-A- 1 613 468
- DE-A- 2 836 230
- US-A- 4 151 434
- US-A- 4 151 434

## Beschreibung

Isolierkappen sollen über die gesamte Lebensdauer der elektrischen Maschine hohe elektrische Durchschlagfestigkeit aufweisen und fest auf den zu isolierenden Stabverbindungen und Ableitungen sitzen. Sie müssen kostengünstig herstellbar und einfach montierbar sein.

Die Isolierkappe, die durch eine reaktiv aushärtbare Kunstharzmischung an der Stabverbindung bzw. Ableitung fixiert ist, besitzt einen Außenmantel, der aus zwei oder mehreren unabhängig voneinander strangezogenen miteinander verbundenen Einzelteilen besteht. In vorteilhafter Ausführungsform ist dieser zweiteilig, bestehend aus stranggezogener Hülse (1) und stranggezogenem Boden (2), wobei im Inneren der Hülse (1) ein Füllkanal (3) angeordnet ist, der mit einer Eintrittsöffnung (5) und die Hülse (1) mit einer Austrittsöffnung (7) versehen ist. Dadurch ist die Isolierkappe unter Einbeziehung einer Abdichtung (6) in jeder Einbaulage montierbar, wobei durch eine entsprechend thixotroph reaktiv aushärtbare Kunstharzmischung und die konstruktive Gestaltung des Außenmantels ein definiertes Füllen der Isolierkappe erfolgt, das nach dem Aushärten die Gewähr für die mechanische und elektrische Festigkeit der Isolierkappe, z.B. für die Schloßverbindungen an Wasserkraftgeneratoren, bietet.

Die Erfindung betrifft eine Isolierkappe für elektrische Maschinen mit Stabwicklungen, die die Verbindungsstellen der einzelnen Wickelstäbe sowie deren Ableitungen isoliert.

Zur Isolation der Verbindungsstellen der Wicklungsstäbe bzw. deren Ableitungen sind verschiedene Möglichkeiten bekannt. Sehr zeitaufwendig ist das Isolieren von Hand durch Umwickeln mit Isolierbändern. Eine weitere Möglichkeit ist die des Umgießens mit Kunstharz, verbunden mit anlegbaren Formen und einer aufwendigen Abdichttechnologie, wie z. B. in der DE 2719256 beschrieben. Auch das Anbringen von Kappen aus Isolierstoff, die nachträglich mit Kunstharz ausgegossen werden, ist eine häufig angewandte technische Lösung.
In der Schrift DE 2836230 werden Isolierkappen in zwei verschiedenen Ausgangslagen montiert. Die Ständerbohrung muß dabei senkrecht angeordnet sein, um die Isolierkappen mit der Öffnung nach oben bzw. nach unten auf die Verbindungsstellen aufzubringen und mit Kunstharz ausfüllen zu können. Nachteilig ist der hohe Aufwand für das Abdichten, da ein niedrigviskoses Kunstharz zum Ausgießen zur Anwendung kommt. Niedrigviskose Kunstharze besitzen einen relativ hohen Volumenschrumpf, so daß für einen festen Verbund zwischen Isolierkappe, Kunstharz und Stabverbindung zusätzlicher Aufwand nötig ist.

Für große Stückzahlen mit gleichen Abmessungen werden Isolierkappen eingesetzt, die in einem Preßverfahren unter Verwendung einer aushärtbaren Preßmasse beispielsweise aus Kunstharz und Glasfasern hergestellt sind. Nachteilig ist neben dem hohen Fertigungsaufwand die beim Pressen entstandene glatte mit Trennmittel behaftete Oberfläche, die zur Gewährleistung einer zuverlässigen Klebeverbindung zwischen Stabverbindung und Isolierkappe vor dem Ausgießen mit Kunstharz aufgerauht oder das Trennmittel anderweitig entfernt werden muß.

Für geringe Stückzahlen mit großer Abmessungspalette wird das Handlaminieren eingesetzt. Dabei wird ein Verstärkungsmaterial, vorzugsweise Glasgewebe oder Glasmatte, von Hand mit einem zum Laminieren geeigneten Kunstharz getränkt, in eine mit Trennmittel versehene einfache Form aus Holz oder Metall eingelegt, in dieser gepreßt und ausgehärtet. Zwar liegen hierbei die Formkosten niedrig, aber die diskontinuierliche Einzelfertigung ist sehr kosten- und zeitaufwendig. Die Qualität wird weitestgehend von der Festigkeit der Arbeitskraft bestimmt. Ein inhomogener Aufbau mit Kunstharzanreicherungen ist infolge der manuellen Fertigung nicht auszuschließen. Dies kann zu Spannungsrissen bzw. zu Rissen durch Alterung führen, wenn an diesen Stellen kein Verstärkungsmaterial vorhanden ist. Weiterhin ist in der Isolierkappe mit einem hohen Luftanteil in Form kleiner Bläschen zu rechnen, da diese aus der geschlossenen Form nicht entweichen. Bei elektrischer Beanspruchung können diese dann zu Durchschlägen führen. Die Wandstärken der handlaminierten Isolierkappen werden deshalb in der Regel überdimensioniert. Bei handlaminierten Isolierkappen ist infolge Trennmitteleinsatz ebenfalls innen und außen eine Haftgrundvorbehandlung erforderlich.
Unabhängig davon, ob die Isolierkappen durch Pressen oder Handlaminieren gefertigt werden, sind zusätzliche Maßnahmen notwendig, um eine feste Verbindung zwischen Stabverbindung, Kunstharzverguß und Isolierkappe zu erreichen und somit ein Lockern oder gar Abfallen der Isolierkappen als Folgeerscheinung einer unzureichenden Verklebung zu verhindern.

Der Erfindung liegt die Aufgabe zu Grunde, eine Isolierkappe für Stabverbindungen und Ableitungen an Wicklungen elektrischer Maschinen zu schaffen, die eine hohe elektrische Durchschlagfestigkeit besitzt, die über die gesamte Lebensdauer einen festen Sitz auf der Stabverbindung bzw. Ableitung garantiert und sich sowohl kostengünstig herstellen, als auch technologisch gut montieren läßt.

Erfindungsgemäß wird die Aufgabe dadurch gelöst, daß die Isolierkappe aus einem Außenmantel, der aus zwei oder mehreren unabhängig voneinander stranggezogenen und miteinander verbundenen Einzelteilen besteht.

Der Außenmantel benötigt keine Vorbehandlung vor dem Ausgießen mit Kunstharz, da durch das kostengünstige Strangziehen eine trennmittelfreie Oberfläche sowohl innen als auch außen entsteht.

Im Zusammenhang mit der konstruktiven Gestaltung und Anordnung der Einzelteile ist eine Montage in jeder Einbaulage an die Stabverbindung bzw. Ableitung und ein blasenarmes Ausgießen, das einen homogenen Aufbau der reaktiv ausgehärteten Kunstharzmischung, welches wiederum die elektrische Durchschlagfestigkeit verbessert, möglich. Durch die feste Verbindung der Einzelteile des Außenmantels, sowohl untereinander als auch mit der Stabverbindung bzw.

Ableitung der Wicklungsstäbe, ist der Formschluß über die gesamte Lebensdauer der Wicklung gewährleistet.

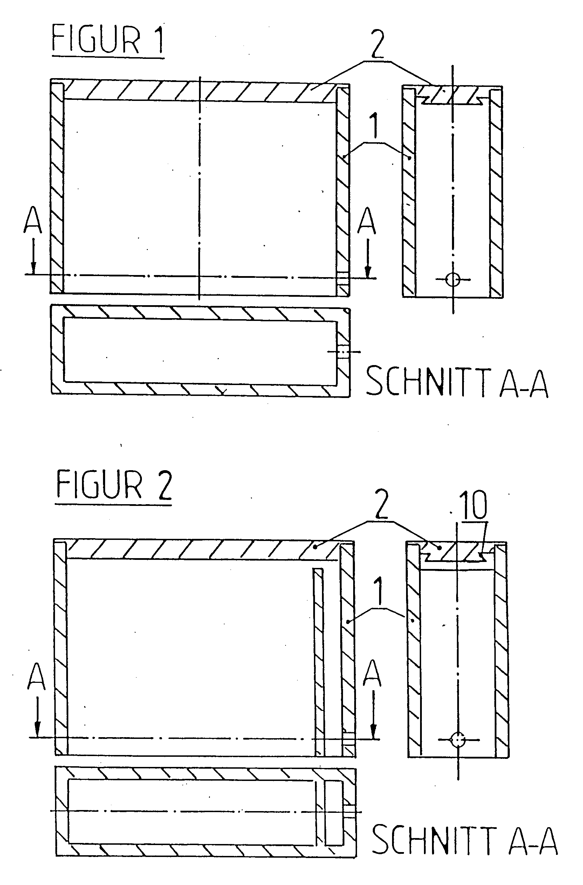

Die vorteilhafte Ausgestaltung der Erfindung soll in mehreren Ausführungsbeispielen an Hand der Figuren 1 bis 4 näher erläutert werden.

Figur 1 zeigt eine dem Anspruch 2 gemäße Ausführungsform des Außenmantels einer zweiteiligen Isolierkappe. Die Begrenzungsfläche des stranggezogenen Bodens 2, der als Verbindungsstelle dient, ist genau der Abmessung der stranggezogenen Hülse 1 angepaßt. Je nach Einbaulage von unten oder oben wird der stranggezogene Boden 2 vor oder nach dem Füllen sorgfältig eingeklebt, wobei die abgestufte, angepaßte Verbindungsstelle eine maximale Klebefläche zwischen beiden Einzelteilen ergibt. Befindet sich die Stabverbindung bzw. Ableitung in einer Lage, die eine Montage der Isolierkappe von oben ermöglicht, ist entsprechend an der zum Blechpaket offenen Seite eine Abdichtung angeordnet, die nach dem Füllen und Aushärten wieder entfernt wird. Das Füllen mit einer reaktiv aushärtbaren Kunstharzmischung in fließfähiger Viskosität erfolgt in beiden Einbaulagen in steigendem Guß.

Figur 2 zeigt einen stranggezogenen Boden 2 gemäß Anspruch 5, wobei an der Innenseite des stranggezogenen Bodens 2 eine Hinterschneidung 10 angeordnet ist, die vorzugsweise als Schwalbenschwanz ausgebildet ist. Diese Hinterschneidung 10 bewirkt in der fertig gefüllten und ausgehärteten Isolierkappe die mechanische Festigkeit, sowohl der Verbindung stranggezogener Boden 2 mit der stranggezogener Hülse 1 als auch den Festsitz des gesamten Außenmantels auf der Stabverbindung bzw. Ableitung über die gesamte Lebensdauer.

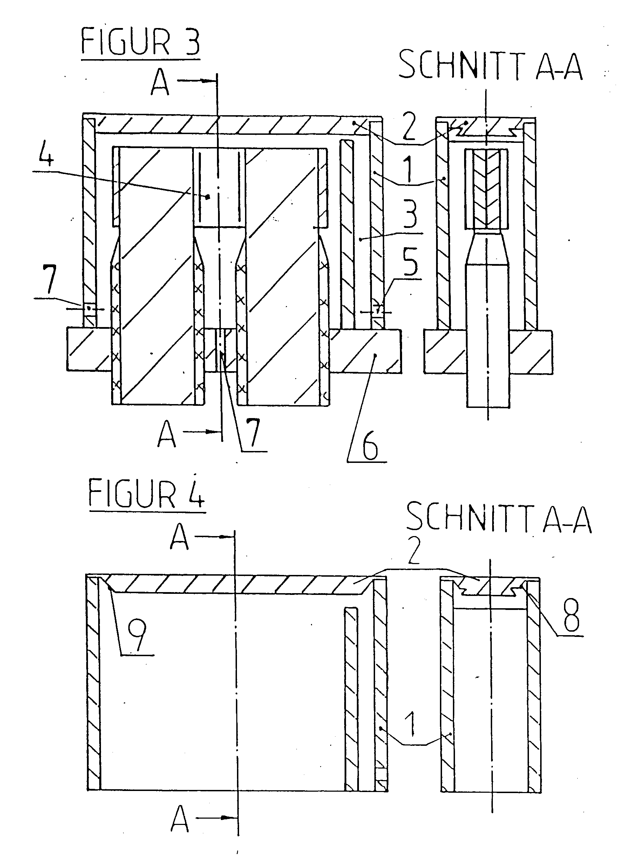

Figur 3 zeigt die bevorzugte Ausführungsform des Außenmantels gemäß Anspruch 3, wobei diese Ausführungsform sich für alle denkbaren Einbaulagen eignet. In der stranggezogenen Hülse 1 ist ein seitlicher Füllkanal 3 angeordnet, dessen Höhe geringer als die Seitenhöhe der stranggezogenen Hülse 1 ist, wobei eine Eintrittsöffnung 5 in den Füllkanal 3 und eine Austrittsöffnung 7, möglichst nahe der dem Boden 2 gegenüberliegenden offenen Seite der Isolierkappe angeordnet ist. Die Austrittsöffnung 7 liegt der Eintrittsöffnung 5 gegenüber.

Die Querschnittsfläche der Austrittsöffnung 7 ist dabei geringer als die der Eintrittsöffnung 5, um einen Rückstau des reaktiv aushärtbaren Kunstharzes zu bewirken, der ein blasenarmes sicheres Füllen gewährleistet. Durch Anordnung eines mit der stranggezogenen Hülse 1 verklebten stranggezogenen Bodens 2 und einer zusätzlichen Abdichtung 6 in Richtung des Blechpaketes ist die Schloßverbindung 4, wie z.B. bei einem Wasserkraftgenerator, dicht umhüllt.
In der Abdichtung 6 kann eine weitere Austrittsöffnung 7 zur Kontrolle des Füllzustandes vorgesehen sein, wobei die Summe der Querschnittsflächen der Austrittsöffnungen 7 kleiner als die Querschnittsfläche der Eintrittsöffnung 5 in den Füllkanal 3 sein muß. Nach dem druckbeaufschlagten Füllen wird die Abdichtung wieder entfernt. Ein Ausfließen der reaktiv aushärtbaren Kunstharzmischung nach Entfernen der Abdichtung 6 erfolgt nicht, da die reaktiv aushärtbare Kunstharzmischung so thixotroph eingestellt ist, daß sie in Ruhelage nicht fließfähig ist.

Der Füllkanal 3 gewährleistet im Zusammenhang mit der thixotroph eingestellten reaktiv aushärtbaren Kunstharzmischung und dem stranggezogenen Boden 2, daß der freie Raum zwischen Stabverbindung 4 und dem auf die Stabverbindung bzw. Ableitung montierten erfindungsgemäßen Außenmantel aus stranggezogener Hülse 1 und stranggezogenen Boden 2, sowie der Abdichtung 6 gleichmäßig mit der reaktiv aushärtbaren Kunstharzmischung vom Boden 2 aus beginnend, vollständig gefüllt wird. Dabei erfolgt eine Zwangsführung der reaktiv aushärtbaren Kunstharzmischung, die Lufteinschlüsse weitestgehend vermeidet.

Figur 4 zeigt eine Ausführungsform des stranggezogenen Bodens 2 gemäß Anspruch 4 mit ganzen oder teilweisen Abschrägungen 8, 9 an den seitlichen Begrenzungsflächen des stranggezogenen Bodens 2, die als zusätzliche Klebefläche wirken, wobei die beiden Einzelteile nicht miteinander verklebt sein müssen. Durch diese Abschrägungen 8, 9 und die Hinterschneidung 10 am stranggezogenen Boden 2 wird die Zwangsführung der reaktiv aushärtbaren Kunstharzmischung in diesem Bereich weiter verbessert.
Die Isolierkappe wird gleichmäßiger ausgefüllt und die elektrische und mechanische Festigkeit nach dem Aushärten vor allem im Bereich des stranggezogenen Bodens 2 wird weiter erhöht. Durch den Einsatz der thixothroph eingestellten reaktiv aushärtbaren Kunstharzmischung erhöht sich gegenüber den bisher eingesetzten technischen Lösungen die mechanische Festigkeit, da vor allem das Lockern der Isolierkappen nach längerer Betriebsdauer der elektrischen Maschine, bedingt durch den geringeren Schrumpf der thixotroph eingestellten reaktiv aushärtbaren Kunstharzmischung, verringert wird.
Des weiteren ist der Einsatz von pulverförmigen Füllstoffen oder von kurzfasrigen Material in der reaktiv aushärtbaren Kunstharzmischung möglich.

## Patentansprüche

1. Isolierkappe für Stabverbindungen und Ableitungen an Wicklungen elektrischer Maschien, die durch eine reaktiv aushärtbare Kunstharzmischung an der Stabverbindung bzw. Ableitung fixiert ist, gekennzeichnet dadurch, daß der Außenmantel der Isolierkappe aus zwei oder mehreren unabhängig voneinander stranggezogenen miteinander verbundenen Einzelteilen besteht.

2. Isolierkappen für Stabverbindungen und Ableitungen an Wicklungen elektrischer Maschinen nach Anspruch 1, gekennzeichnet dadurch, daß der Außenmantel der Isolierkappe bei zweiteiliger Ausführung aus einer stranggezogenen Hülse (1) und einem mit diesem verbundenen stranggezogenen Boden (2) besteht.

3. Isolierkappe für Stabverbindungen und Ableitungen an Wicklungen elektrischer Maschinen nach Anspruch 2, dadurch gekennzeichnet, daß in der stranggezogenen Hülse (1) ein seitlicher Füllkanal (3), dessen Höhe geringer als die Seitenhöhe der Hülse (1) ist, angeordnet ist, und je nach Einbaulage eine Eintrittsöffnung (5) in den Füllkanal (3) und eine Austrittsöffnung (7) nahe der dem Boden (2) gegenüberliegenden offenen Seite der Isolierkappe und gegenüber der Eintrittsöffnung, wobei die Querschnittsfläche der Austrittsöffnung (7) geringer als die der Eintrittsöffnung (5) ist, angeordnet sind.

4. Isolierkappe für Stabverbindungen und Ableitungen an Wicklungen elektrischer Maschinen nach Anspruch 2, gekennzeichnet dadurch, daß am stranggezogenen Boden (2) an den seitlichen Begrenzungsflächen ganz oder teilweise Abschrägungen (8, 9) angeordnet sind.

5. Isolierkappe für Stabverbindungen und Ableitungen an Wicklungen elektrischer Maschinen nach Anspruch 2 oder 4, gekennzeichnet dadurch, daß auf der Innenseite des stranggezogenen Bodens (2) Hinterschneidungen (10) angeordnet sind.

## Claims

1. Insulating cap for bar connections and terminal leads of windings of electrical machines, the cap being fixed to the bars or terminal leads by a reactively curable synthetic-resin mixture and its outer casing consisting of two or several individually extruded parts connected to each other.

2. Insulating cap for bar connections and terminal leads of windings of electrical machines according to claim 1, with the outer casing of the insulating cap consisting, in case of a two-part design, of an extruded sleeve (1) and an extruded bottom (2) connected to the former.

3. Insulating cap for bar connections and terminal leads of windings of electrical machines according to claim 2, characterized by an extruded sleeve (1) accommodating a lateral filling channel (3) whose height is lower than the lateral height of the sleeve (1), the filling channel (3) being provided, in dependence of the mounting position, with an inlet opening (5) and an outlet opening (7), the latter being arranged near the open side of the insulating cap, i.e. opposite the bottom (2), and opposite the inlet opening, with the cross-section of the outlet opening (7) being smaller than that of the inlet opening (5).

4. Insulating cap for bar connections and terminal leads of windings of electrical machines according to claim 2, characterized by the lateral faces of the extruded bottom (2) being wholly or partly bevelled (8, 9).

5. Insulating cap for bar connections and terminal leads of windings of electrical machines according to claim 2 or 4, characterized by the inner face of the extruded bottom (2) being undercut (10).

## Revendications

1. Capuchon isolant pour connexions à barres et dérivations aux enroulements de machines électriques, fixé à la connexion à barres, voire à la dérivation par un mélange de résine synthétique à durcissement réactif et qui se distingue par une gaine externe formée de deux éléments individuels extrudés indépendamment l'un de l'autre et reliés ensemble.

2. Capuchons isolants pour connexions à barres et dérivations aux enroulements de machines électriques, conformément à la revendication n° 1, qui se distinguent par le fait que lors de l'exécution en deux éléments, la gaine externe du capuchon isolant se compose d'une cosse extrudée (1) et d'un fond extdudé (2) relié à la gaine.

3. Capuchon isolant pour connexions à barres et dérivations aux enroulements de machines électriques, conformément à la revendication n°2, qui se distingue par le fait que la cosse extrudée (1) possède un canal de remplissage (3) d'une hauteur inférieure à la hauteur latérale de la cosse (1), qui se distingue d'autre part, selon la position de montage, par un orifice d'entrée (5) dans le canal de remplissage (3) et d'un orifice de sortie (7) à proximité de la partie ouverte du capuchon isolant se trouvant à l'opposé du fond extrudé et à l'opposé de l'orifice d'entrée(2).

4. Capuchon isolant pour connexions à barres et dérivations aux enroulements de machines électriques, conformément à la revendication n°2, qui se distingue par le fait que des biseautages complets ou partiels (8,9) sont disposés sur les surfaces limites latérales au niveau du fond extrudé (2).

5. Capuchon isolant pour connexions à barres et dérivations aux enroulements de machines électriques, conformément aux revendications n°2 et n°4, qui se distingue par le fait que des contre dépouilles (10) se trouvent sur la partie interne du fond extrudé (2).
